# EUROPEAN PATENT SPECIFICATION

(11) **EP 0 565 041 B1**
(45) Date of publication and mention of the grant of the patent: **05.06.1996**
(21) Application number: 93105661.8
(22) Date of filing: 06.04.1993
(51) Int. Cl.: F16H 7/12

(54) **A unit for driving two endless belts, for an internal combustion engine**
Antriebseinheit für zwei Endlosriemen, für eine Brennkraftmaschine
Unité d'entraînement pour deux courroies sans fin, pour un moteur à combustion interne

(30) Priority: 10.04.1992 IT TO920331
(43) Date of publication of application: 13.10.1993
(73) Proprietor: FIAT AUTO S.p.A., I-10135 Torino (IT)
(72) Inventor: Bonazza, Ruggero, I-10154 Torino (IT)
(74) Representative: Marchitelli, Mauro

(56) References cited:
- DE-A- 3 021 092
- DE-B- 1 072 041
- US-A- 4 997 409

## Description

The present invention relates to a unit for driving two endless belts for an internal combustion engine, having the features indicated in the pre-characterizing portion of annexed claim 1.

DE-A-3 021 092 discloses a unit of the type specified above.

When it is necessary to be able to vary the tension of at least one of the belts which extend around the pulleys of the drive unit, problems may arise due to the difficulty of gaining access to the pulleys selectively without the need to dismantle the unit and/or disengage the belts.

This problem is experienced most when it is necessary to alter the tension of the inner tightening pulley of the unit, that is, the pulley situated between the wall of the engine with which the unit is associated and the outer pulley. Indeed, in this case, the outer pulley makes it even more inconvenient and difficult to adjust the inner pulley.

The object of the present invention is to provide a unit for driving two endless belts in which the tension of at least one of the belts can be adjusted without the need to dismantle the unit or disengage the belts from their pulleys.

This object is achieved by virtue of the features recited in claim 1.

By virtue of these characteristics, the tension of at least one of the belts passing around one of the pulleys can be adjusted easily from outside the unit, enabling the adjustment to be carried out with greater practicality and speed.

Further characteristics and advantages of the present invention will become clear from the detailed description which follows with reference to the appended drawings, given purely by way of non-limiting example, in which:

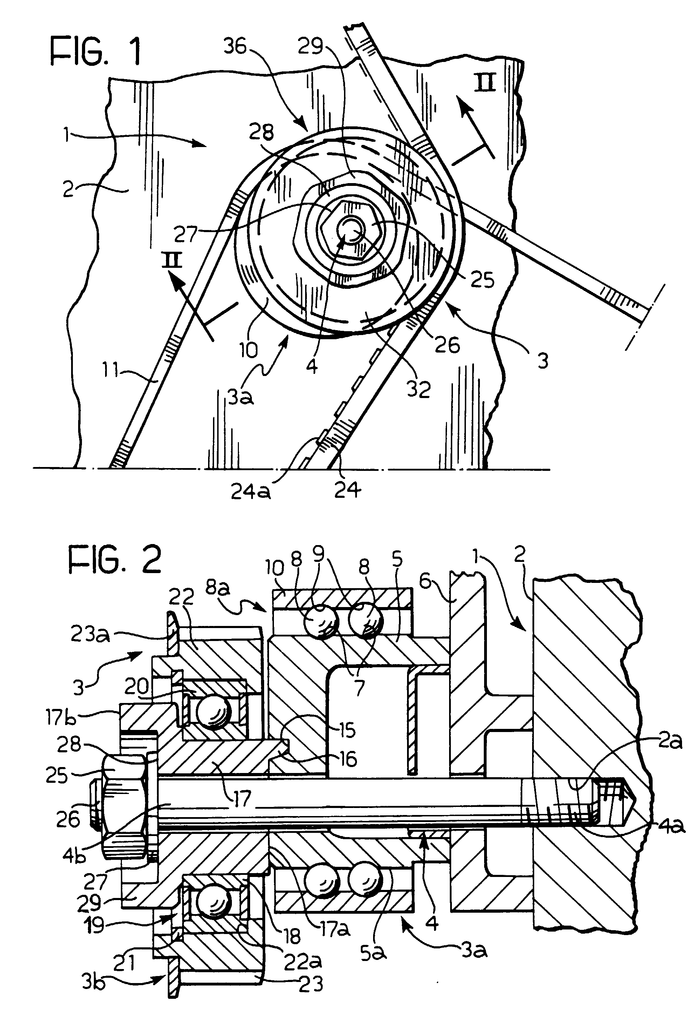

Figure 1 is an elevational view of a unit for driving two endless belts, according to the present invention,
Figure 2 is a side elevation taken on the line II-II of Figure 1, on an enlarged scale,
Figure 3 is an elevational view of the control means associated with the unit, on an enlarged scale, and
Figure 4 is a variant of the control means shown in Figure 3.

With reference to the drawings, an internal combustion engine, generally indicated 1, has a wall 2 to which a unit 3 for driving two endless belts is connected.

A shaft 4 which acts as a locating pin has an end 4a engaged in a hole 2a in the wall 2.

The shaft 4 carries two tightening pulleys 3a, 3b disposed side by side in parallel planes. The tightening pulley 3a is disposed on the inner side of the unit 3 between the wall 2 and the outer pulley 3b and includes a journal 5 which is mounted eccentrically on the shaft 4 and separated axially from the wall 2 of the engine 1 by a spacer element 6.

The cylindrical outer surface 5a of the journal 5 has two annular races 7 each engaged by a plurality of balls 8 interposed between the journal 5 and a pulley wheel 10 which can rotate freely on the journal 5 and the inner surface of which also has a pair of annular races 9 similar to the races 7 and engaged by the balls 8 so as to form a first rolling bearing 8a. A first belt 11 extends around part of the outer pulley wheel 10.

The outer tightening pulley 3b includes a second journal 17 which is carried coaxially by the shaft 4 and is coupled for rotation with the journal 5 by means of a tab 16 which extends axially from one end 17a of the journal 17 to engage a corresponding recess 15 in the end of the journal 5.

The inner race 18 of a second rolling bearing 19 is keyed to the outer surface of the journal 17 and its outer race 20 is clamped axially, by means of a split ring 21, to a pulley wheel 22 which forms part of the outer tightening pulley 3a. The pulley wheel 22 has an internal annular shoulder 22a on its side opposite the resilient ring 21, against which the race 20 of the bearing 19 bears. The outer surface of the pulley wheel 22 has teeth 23 for engagement by teeth 24a of a toothed belt 24. The pulley wheel 22 also has an annular rim 23a, the function of which is to prevent the belt 24 from slipping off the pulley 3b axially when the belt is rotated.

A lock nut 25 engages an external thread 26 on the end portion 4b of the shaft 4 to prevent the tightening pulleys 3a and 3b from slipping off axially by clamping the journals 5 and 17 axially against the engine.

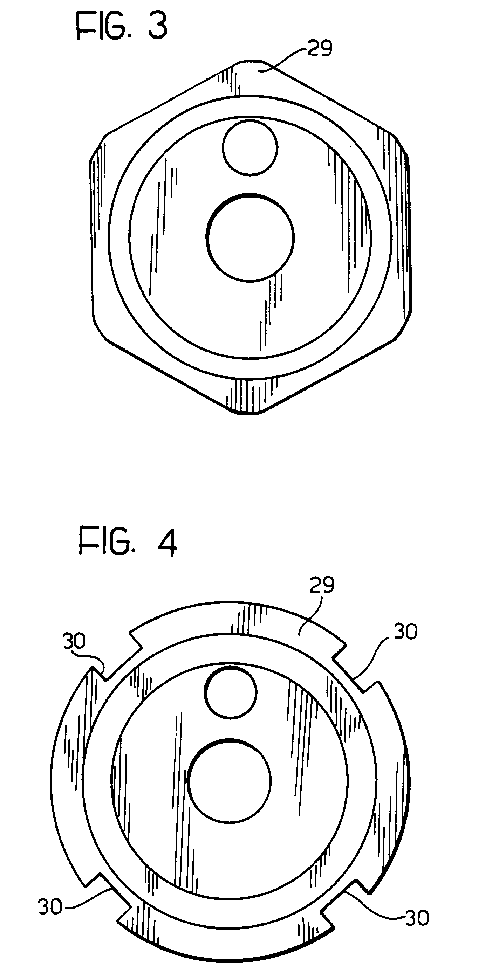

The nut 25 abuts a frontal shoulder surface 28 near the end 17b of the journal 17 axially opposite its end 17a, with the interposition of a washer 27. A collar 29 extends between the shoulder surface 28 and the outer end 17b of the journal 17 so as partially to surround the lock nut 25. The outer surface of the collar 29 is, for example, hexagonal (Figure 3) or has a plurality of radial grooves 30 (Figure 4) so that it can be engaged by a tool (not shown).

The lock nut 25 has the function both of preventing the journals 5 and 17, and hence the pulleys 3a and 3b, from slipping off the shaft 4 axially and of clamping the pulley 3a in the selected angular position relative to the wall 2 of the engine 1. In fact, the friction between the end of the eccentric journal 5 which faces the wall 2 and the spacer element 6 prevents accidental changes in the predetermined angular orientation of the journal 5.

In order to alter the tension of the belt 11, it suffices to unscrew the nut 25 partially and to use a suitable spanner to engage the outer surface of the collar 29 so as to rotate it, thereby rotating the journal 5 relative to the shaft 4, until the desired tension of the belt 11 is achieved. When this position of the unit 3 is reached, the nut 25 is tightened again with a tension such as to prevent relative rotation between the journal 5 and the spacer element 6.

Naturally, the principle of the invention remaining the same, the forms of embodiment and details of construction may be varied widely without thereby departing from the scope of the present invention; for example, both pulley wheels 10 and 22 may be carried by journals which are mounted eccentrically on the locating pin 4 so that the tensions of both of the belts carried by the tightening pulleys 3a and 3b can be varied; moreover, the drive unit 3 may also include more than two tightening pulleys.

## Claims

1. A unit for driving two endless belts for an internal combustion engine, including:
- a shaft (4),
- two pulleys, an inner pulley and an outer pulley (3a, 3b), disposed side by side and each including a hollow support (17, 5) rotatably mounted on the shaft (4) and a ring (22, 10) which can rotate coaxially on the hollow support (17, 5) and around which a respective belt (24, 11) extends, at least the hollow support (5) of the inner pulley (3a) being eccentric relative to the shaft (4), and
- releasable retaining means (25, 26) for clamping the hollow supports (17, 5) to the shaft (4),
characterised in that control means (15, 16, 29) adapted to couple for rotation the hollow supports (17, 5) when the retaining means (25, 26) are released, are provided, said control means being operable from outside the unit (3) to vary the angular position of at least the hollow support (5) of the inner pulley (3a) relative to the shaft (4) when the retaining means (25, 26) are released.

2. A unit according to Claim 1, characterised in that the control means (15, 16, 29) are associated with the hollow support (17) of the outer pulley (3b).

3. A unit according to Claim 2, characterised in that the control means (15, 16, 29) can be operated by the rotation of the hollow support (17) of the outer pulley (3b).

4. A unit according to Claim 3, characterised in that the control means include:
- an axial appendage (16) which projects from one side (17a) of the hollow support (17) of the outer pulley (3b) and is engaged in a corresponding seat (15) in the hollow support (5) of the inner pulley (3a), and
- an engagement portion (29) which projects from the opposite end (17b) of the hollow support (17) of the outer pulley (3b) for the rotation thereof.

5. A unit according to Claim 4, characterised in that the engagement portion (29) of the hollow support (17) of the outer pulley (3b) is annular, and in that the releasable retaining means are constituted by a nut (25) which is screwed onto a threaded end portion (26) of the shaft (4) and is disposed within the annular engagement portion (29).

## Patentansprüche

1. Vorrichtung zum Antrieb von zwei Endlosriemen für einen Verbrennungsmotor, wobei die Vorrichtung aufweist:
eine Welle (4),
zwei Riemenscheiben, d.h. eine innere Riemenscheibe und eine äußere Riemenscheibe (3a, 3b), die nebeneinander angeordnet sind, wobei jede Riemenscheibe eine hohle Halterung (17, 5), die auf der Welle (4) drehbar befestigt ist, sowie einen Ring (22, 10) aufweist, der sich auf der hohlen Halterung (17, 5) koaxial drehen kann, und um den ein entsprechender Riemen (24, 11) verläuft, wobei zumindest die hohle Halterung (5) der inneren Riemenscheibe (3a) relativ zur Welle (4) exzentrisch liegt, und
eine freigebbare Festhalteeinrichtung (25, 26), um die hohlen Halterungen (17, 5) auf die Welle (4) zu spannen,
dadurch gekennzeichnet, daß eine Steuereinrichtung (15, 16, 29) vorgesehen ist, die dazu dient, um die hohlen Halterungen (17, 5) für eine Drehung zu kuppeln, wenn die Festhalteeinrichtung (25, 26) freigegeben ist, wobei die Steuereinrichtung von außerhalb der Vorrichtung (3) betätigt werden kann, um die Winkelstellung zumindest der hohlen Halterung (5) der inneren Riemenscheibe (3a) relativ zur Welle (4) zu verändern, wenn die Festhalteeinrichtung (25, 26) freigegeben ist.

2. Vorrichtung gemäß Anspruch 1, dadurch gekennzeichnet, daß die Steuereinrichtung (15, 16, 29) der hohlen Halterung (17) der äußeren Riemenscheibe (3b) zugeordnet ist.

3. Vorrichtung gemäß Anspruch 2, dadurch gekennzeichnet, daß die Steuereinrichtung (15, 16, 29) durch die Drehung der hohlen Halterung (17) der äußeren Riemenscheibe (3b) betätigt werden kann.

4. Vorrichtung gemäß Anspruch 3, dadurch gekennzeichnet, daß die Steuereinrichtung aufweist:
eine axiale Verlängerung (16), die von einer Seite (17a) der hohlen Halterung (17) der äußeren Riemenscheibe (3b) vorspringt und in einen entsprechenden Sitz (15) in der hohlen Halterung (5) der inneren Riemenscheibe (3a) eingreift, und
einen Eingreifteil (29), der vom entgegengesetzten Ende (17b) der hohlen Halterung (17) der äußeren Riemenscheibe (3b) vorspringt, um diese drehen zu können.

5. Vorrichtung gemäß Anspruch 4, dadurch gekennzeichnet, daß der Eingreifteil (29) der hohlen Halterung (17) der äußeren Riemenscheibe (3b) ringförmig ausgebildet ist, und daß die freigebbare Festhalteeinrichtung von einer Mutter (25) gebildet wird, die auf einen Gewinde-Endteil (26) der Welle (4) geschraubt wird und innerhalb des ringförmigen Eingreifteils (29) angeordnet ist.

## Revendications

1. Unité destinée à entraîner deux courroies sans fin pour un moteur à combustion interne, comprenant :
- un arbre (4),
- deux poulies, une poulie intérieure et une poulie extérieure (3a, 3b), disposées côte à côte et comprenant chacune un support creux (17, 5), monté rotatif sur l'arbre (4) et une bague (22, 10) qui peut tourner coaxialement sur le support creux (17, 5) et qui sont embrassées chacune par une courroie respective (24, 11), au moins le support creux (5) de la poulie intérieure (3a) étant excentrique par rapport à l'arbre (4), et
- des moyens de retenue déverrouillables (25, 26) destinés à bloquer les supports creux (17, 5) par rapport à l'arbre (4), caractérisée en ce qu'il est prévu des moyens de commande (15, 16, 29) adaptés pour accoupler les supports creux (17, 5) en rotation lorsque les moyens de retenue (25, 26) sont déverrouillés, lesdits moyens de commande pouvant être actionnés de l'extérieur de l'unité (3) pour modifier la position angulaire d'au moins le support creux (5) de la poulie intérieure (3a) par rapport à l'arbre (4) lorsque les moyens de retenue (25, 26) sont déverrouillés.

2. Unité selon la revendication 1, caractérisée en ce que les moyens de commande (15, 16, 29) sont associés au support creux (17) de la poulie extérieure (3b).

3. Unité selon la revendication 2, caractérisée en ce que les moyens de commande (15, 16, 29) peuvent être actionnés par la rotation du support creux (17) de la poulie extérieure (3b).

4. Unité selon la revendication 3, caractérisée en ce que les moyens de commande comprenant :
- un bossage axial (16) qui fait saillie sur un côté (17a) du support creux (17) de la poulie extérieure (3b) et est engagé dans un logement correspondant (15) du support creux (5) de la poulie intérieure (3a), et
- une partie de prise (29) qui fait saillie sur l'extrémité opposée (17b) du support creux (17) de la poulie extérieure (3b) pour permettre de faire tourner ce support.

5. Unité selon la revendication 4, caractérisée en ce que la partie de prise (29) du support creux (17) de la poulie extérieure (3b) est annulaire et en ce que les moyens de retenue déverrouillables sont constitués par un écrou (25) qui est vissé sur une partie terminale filetée (26) de l'arbre (4) et est disposé dans la partie de prise annulaire (29).
